# EUROPEAN PATENT SPECIFICATION

(11) **EP 1 640 244 B1**
(45) Date of publication and mention of the grant of the patent: **05.08.2015**
(21) Application number: 04022827.2
(22) Date of filing: 24.09.2004
(51) Int. Cl.: B62D 5/04

(54) **Method of controlling recovery in electric power steering system**
Verfahren zum Steuern der Rückstellung einer elektrischen Servolenkung
Méthode de commande du rappel de direction assistée électrique

(43) Date of publication of application: 29.03.2006
(73) Proprietor: Mando Corporation, Pyungtaek-si, Kyunggi-do, 451-820 (KR)
(72) Inventor: Kim, Seong-Joo, Bundang-gu Sungnam-si Kyunggi-do 463-070 (KR)
(74) Representative: Bosch, Matthias

(56) References cited:
- EP-A- 1 300 321
- DE-A1- 3 923 654
- US-A1- 2002 060 538

## Description

### BACKGROUND OF THE INVENTION

### 1. Field of the Invention

The present invention relates to a method of controlling recovery in an electric power steering system, and more particularly, to a method of controlling recovery in an electric power steering system which can enhance the recovery control function during recovery after steering when discriminating a recovery state using a steering angle and a steering angular velocity by determining whether or not the steering angular velocity is more than a predetermined value and carrying out recovery control only in the corresponding recovery state.

### 2. Description of the Related Art

Generally, a vehicle is provided with an electronic control unit (hereinafter, 'ECU') for a vehicle that receives an input of an electric signal detected from various kinds of input sensors and outputs a digital control signal which operates various kinds of actuators at the output side.

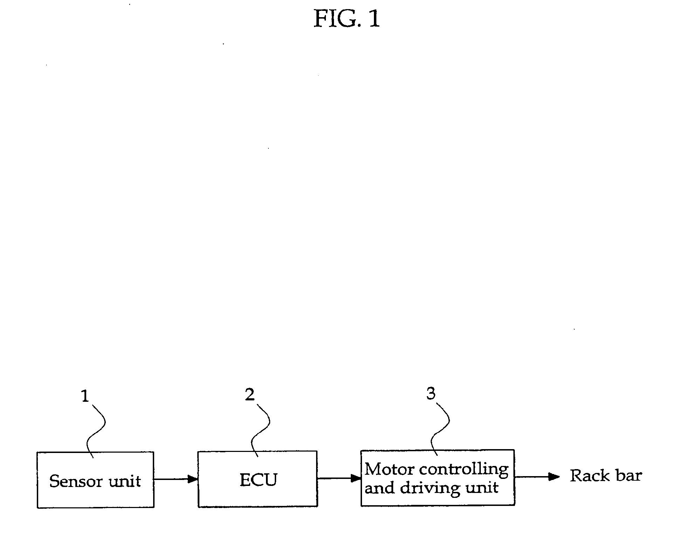

Meanwhile, there has been developed an EPS system that enables a light and quick steering operation by reducing the actuating force of a driver's steering wheel according to the speed of a vehicle using such an ECU. As shown in Fig. 1, this EPS system includes a sensor unit 1 such as a speed sensor detecting a vehicle speed, a motor position sensor (or a steering angle sensor in case of a vehicle having a steering angle sensor) detecting the relative steering angle of a motor, a torque sensor detecting the torque of a driver steering wheel, etc., an ECU 2 receiving an input of a signal detected from the sensor unit 1 and outputting various kinds of motor control signals and operation signals for reducing the actuating force of the driver's steering wheel and a motor controlling and driving unit 3 controlling the operation of the motor according to the motor control signals and operation signals from the ECU 2 and operating a steering mechanism by a steering assistance force which is caused by a generating power according to driving of the motor.

The thusly constructed EPS system further includes an appliance unit such as a motor or reduction gear in addition to a general hydraulic power steering system, and thus is increased in friction. Accordingly, the characteristics like the degradation of friction feel or stability during steering are shown.

Therefore, a graph of the relation of a steering torque with respect to a steering input angle will be shown, in which the hysteresis becomes more than those of other hydraulic power steering vehicles. In the prior art, a recovery control function was used to compensate for the demerit.

Especially, a recovery control is carried out while seeing a return speed or retention angle of a steering wheel being not held after steering. That is, if a driver let go of the steering wheel, an assist current by which the steering wheel faces to a neutral position is generated using an absolute steering angle signal, thereby making the steering wheel easily returned after steering.

However, in the prior art recovery control method, a recovery state is discriminated by judging that the driver lets go of the steering wheel if the signal of the torque sensor is smaller than a predetermined value. Thus, if the driver slowly releases the steering wheel without completely letting go of the steering wheel, there occurs a problem that a complete recovery control is not applied since a small quantity of a torque exists in the steering wheel.

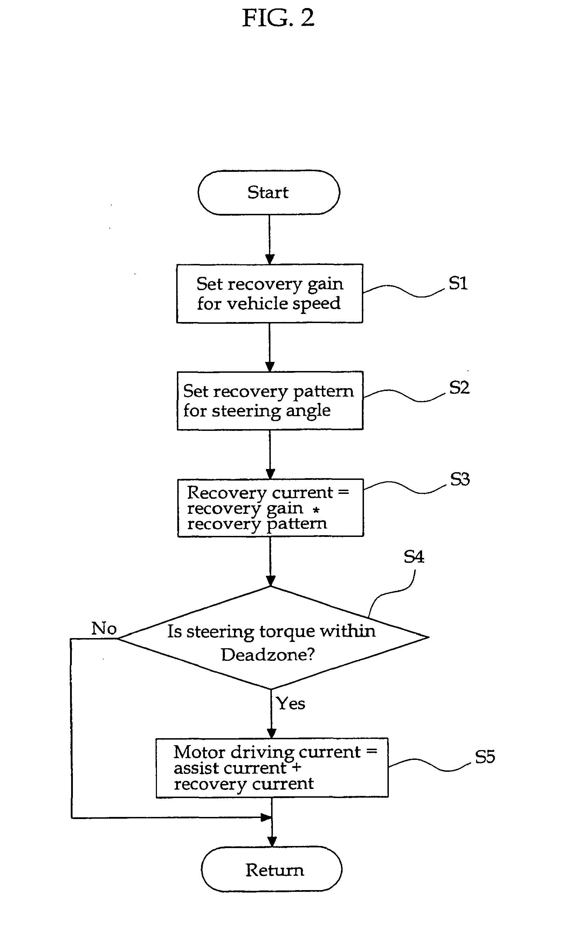

In other words, as shown in Fig. 2, a recovery gain for a vehicle speed is set (S1), a recovery pattern for a steering angle is set (S2) and then a recovery current is obtained by multiplying the recovery gain and the recovery pattern (S3).

Afterwards, it is determined whether a steering torque is within Deadzone (Deadzone is a range which a torque can not be felt in) (S4).

As the result of the determining of the steps S4, in a case that, the steering wheel is not positioned in a straight traveling state and the steering torque is within Deadzone because of driver's letting go of the steering wheel, an assist current and the recovery current obtained in the step S3 are summed to obtain a motor driving current (S5). The assist current is calculated with the torque sensor signal and the information of the vehicle speed. Finally, the recovery control function is carried out by controlling the operation of the motor according to the motor driving current obtained in the step S5.

However, also in the above-described recovery control method, a recovery state is discriminated based on the steering torque as in the steps S4, and then recovery control is carried out. Subsequently, in case that the driver operates the steering wheel a little in left and right direction during turning of the vehicle, a frequent alternation between a recovery state and a steering state is instantly occured. Due to this, a discontinuous motor driving current is generated by a recovery control logic, thereby arousing a problem that the driver feels the steering feeling roughly.

US 2002/060538 A1 is concerning with a control unit for an electric power steering apparatus and discloses the generation of a steering wheel control signal.

First, a steering wheel return basic current circuit outputs a steering wheel return basic current value using a predetermined function based on a steering angle. Second a gain circuit outputs a gain value based on a vehicle speed using a predetermined function. Third, the steering wheel return basic current value and the gain value are multiplied by a multiplier that outputs the resulting output signal to a switch.

If the switch is in a first state then the output of the multiplier is output as the steering wheel control signal. However, if the switch is in a second state then the output of the multiplier is multiplied by zero so that zero is output as steering wheel return control signal.

Switching of the switch is caused by a sign decision circuit that compares the sign of the steering angle and the sign of the steering angular velocity in such a way that the switch is switched to the first state when the compared signs do not coincide with each other, i.e. if the steering wheel is activated by the driver for returning it into its center position. Otherwise, if the signs to be compared coincide with each other, i.e. the steering wheel is operated by the driver in the steering direction then the-switch is set into its second state so that zero is output as steering wheel return control signal. In addition, the switch is set into its second state if the steering angular velocity is zero and the sign decision circuit dicides that the move of the steering wheel is a stop status.

Therefore, similarly as discussed above there is a problem if the driver needs to correct the steering wheel position during turning, i.e. if the driver during turning right needs to correct the steering wheel position slightly by turning the steering wheel to the left, to the right, again to the left and so on, so that the control frequently switches between a recovery state and a steering state causing a rough steering feeling.

DE 39 23 654 A1 discloses a method of controlling recovery/return in an electric power steering system wherein a servo control signal it generated in accordance to a steering torque and a return control signal are added after the control signal has passed a vehicle speed discriminator circuit so that the added signal will become negative as soon as the steering torque is zero during turning right. Thus, the decision whether the system as in a recovery/return state or in a steering state is based on the steering torque. Therefore, the problems caused by this recovery control method are the same as discussed above.

EP 1 300 321 A1 is concerned with a method of controlling recovery in an electric power steering system. According to this method a current for controlling a damping function is obtained by multiplying a first or a second basic value determined in dependence on a steering angle velocity with a gain value determined in dependence on the vehicle speed.

The first basic value is used to calculate the current in case that the steering wheel returns to its center position whereas the second basic value is used if the steering wheel is operated to move away from its center position.

With regard to switching between a recovery state and a steering state EP 1 300 321 A1 only teaches to switch from the steering state to the recovery state when the sign of the steering angle velocity changes, i.e. when the steering angle velocity passes zero.

### SUMMARY OF THE INVENTION

The present invention is designed in consideration of the problems of the prior art, and therefore it is an object of the present invention to provide a method of controlling recovery in an EPS system which can acquire an enhanced recovery control function with a smoother steering feeling during recovery after steering when discriminating a recovery state using a steering angle and a steering angular velocity by discriminating a recovery state under the condition that a steering angular velocity is more than a predetermined value and carrying out recovery control not in a case that the steering angular velocity is in an alternation state, which occurs when a steering wheel is held, but in a case the recovery speed of the steering wheel is more than a predetermined value.

To achieve the above object, there is provided a method of controlling recovery in an electric power steering system in accordance with the present invention, comprising: a first step of setting a recovery gain for a vehicle speed in an ECU of the EPS system and setting a recovery pattern for a steering angle; a second step of obtaining a recovery current by multiplying the recovery gain and the recovery pattern set in the first step; a third step of determining whether a steering angular velocity is more than a lower limit set value of counterclockwise(CCW) direction at a steering position of a vehicle turning right or the steering angular velocity is more than a lower limit set value of clockwise(CW) direction at a steering position of the vehicle turning left; and a fourth step of obtaining a motor driving current by summing an assist current and the recovery current obtained in the second step if the steering angular velocity is more than the lower limit set value of counterclockwise direction at the steering position of the vehicle turning right or the steering angular velocity is more than the lower limit set value of clockwise direction at the steering position of the vehicle turning left as the result of the determining in the third step and performing the recovery control function by controlling the operation of the motor according to the obtained motor driving current.

### BRIEF DESCRIPTION OF THE DRAWINGS

Other objects and aspects of the present invention will become apparent from the following description of embodiments with reference to the accompanying drawings in which:
Fig. 1 is a schematic block diagram of a conventional EPS system;
Fig. 2 is a flow chart showing a prior art method of controlling recovery in an EPS system; and
Fig. 3 is a flow chart showing a method of controlling recovery in an EPS system in accordance with the present invention.

### DESCRIPTION OF THE PREFERRED EMBODIMENT

Hereinafter, a method of controlling recovery in an EPS system of the present invention will be described in more detail referring to the accompanying drawings.

As shown in Fig. 1, the EPS system includes a sensor unit 1 having a vehicle speed sensor, a motor position sensor, a torque sensor, etc., an ECU 2 and a motor controlling and driving unit 3.

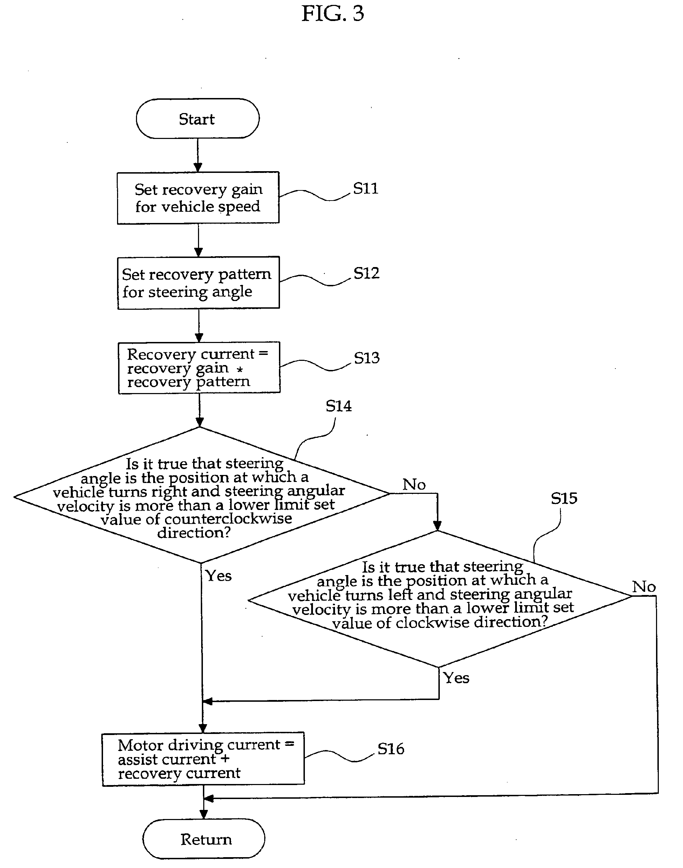

The method of controlling recovery in accordance with the present invention that is carried out in the thusly constructed EPS system will be described with reference to Fig. 3 as follows.

First, the ECU 2 of the EPS system sets a recovery gain for a vehicle speed detected through the vehicle speed sensor in the sensor unit 1 (S11), and a recovery pattern for a steering angle detected through the motor position sensor in the sensor unit 1 is set (S12).

Continuously, the recovery gain set in the step S11 and the recovery pattern set in the step S12 are multiplied to obtain a recovery current (S13).

Then, it is determined whether or not the steering angle, i.e., the steering position detected through the motor position sensor (or a steering angle sensor) in the sensor unit 1 is the position at which the vehicle turns right and the steering angular velocity is more than a lower limit set value of counterclockwise(-) direction (S14). As a result of the determining, if it is not the case that the steering position is the position at which the vehicle turns right and the steering angular velocity is more than a lower limit set value of counterclockwise(-) direction, then it is determined whether or not the steering position detected through the motor position sensor in the sensor unit 1 is the position at which the vehicle turns left and the steering angular velocity is more than a lower limit set value of clockwise(+) direction (S 15).

In other words, it is determined whether the steering angular velocity is more than a reference steering angular velocity by comparing the steering angular velocity with the absolute values for the lower limit set value of the counterclockwise(-) direction revolution speed and lower limit set value of the clockwise(+) direction revolution speed. This is for carrying out recovery control only when the recovery speed of the steering wheel is more than a predetermined value.

Afterwards, as the result of the steps S14 and S15, if the steering position is the position at which the vehicle turns right and the steering angular velocity is more than a lower limit set value of counterclockwise direction or the steering position is the position at which the vehicle turns left and the steering angular velocity is more than a lower limit set value of clockwise direction, the ECU 2 obtains a motor driving current by summing the assist current and the recovery current obtained in the step S13 (S16). Finally, the recovery control function is carried out by controlling the operation of the motor according to the motor driving current obtained in the step S16.

As seen from above, in the present invention, the steering feeling which the driver feels can be enhanced by carrying out recovery control in a manner to use a steering angle and a steering angular velocity as the condition of applying recovery control and determining a recovery state if the steering angular velocity is more than a predetermined value in a subdivided condition.

As mentioned above, the present invention can acquire an enhanced recovery control function with a smoother steering feeling during recovery after steering when discriminating a recovery state using a steering angle and a steering angular velocity by discriminating a recovery state under the condition that a steering angular velocity is more than a predetermined value and carrying out recovery control not in a case that the steering angular velocity is in an alternation state, which occurs when a steering wheel is held, but in a case the recovery speed of the steering wheel is more than a predetermined value.

In other words, only when the recovery speed of the steering wheel is more than a predetermined value, the recovery control is carried out. Thus, in case of turning and retaining a steering angle, the driver can have an improved steering feeling.

## Claims

1. A method of controlling recovery in an electric power steering system, comprising:
- a first step of setting a recovery gain for a vehicle speed (S11) in an ECU of the EPS system and setting a recovery pattern for a steering angle (S12);
- a second step of obtaining a recovery current (13) by multiplying the recovery gain set in the first step and the recovery pattern set in the first step;
- a third step of determining whether the steering angle is a steering position at which a vehicle turns right and the steering angular velocity is more than a lower limit set value of counterclockwise direction (S14) or the steering angle is a steering position at which the vehicle turns left and the steering angular velocity is more than a lower limit set value of clockwise direction (S15) after performing the second step; and
- a fourth step of obtaining a motor driving current by summing an assist current and the recovery current obtained in the second step if the steering angular velocity is more than the lower limit set value of counterclockwise direction at the steering position of the vehicle turning right or the steering angular velocity is more than the lower limit set value of clockwise direction at the steering position of the vehicle turning left as the result of the determining in the third step; and
- performing a recovery control function by controlling the operation of the motor according to the obtained motor driving current.

## Patentansprüche

1. Verfahren zum Steuern der Rückstellung in einem elektrischen Servolenkungssystem, das umfasst:
einen ersten Schritt des Einstellens einer Rückstellungsgewinnung für eine Fahrzeuggeschwindigkeit (S11) in einem elektronischen Steuergerät des elektrischen Servolenkungssystems und des Einstellens eines Rückstellungsmusters für einen Lenkwinkel (S12);
einen zweiten Schritt des Erhaltens eines Rückstellungsstroms (13) durch Multiplizieren der in dem ersten Schritt eingestellten Rückstellungsgewinnung und des in dem ersten Schritt eingestellten Rückstellungsmusters;
einen dritten Schritt des Ermittelns, ob der Lenkwinkel eine Lenkposition ist, bei der ein Fahrzeug nach rechts dreht und die Lenkwinkelgeschwindigkeit größer als ein eingestellter unterer Grenzwert der links drehenden Richtung (S14) ist, oder der Lenkwinkel eine Lenkposition ist, bei der das Fahrzeug nach links dreht und die Lenkwinkelgeschwindigkeit größer als ein eingestellter unterer Grenzwert der rechts drehenden Richtung (S15) ist, nach dem Durchführen des zweiten Schritts; und
einen vierten Schritt des Erhaltens eines Motorantriebsstroms durch Addieren eines Hilfsstroms und des in dem zweiten Schritt erhaltenen Rückstellungsstroms, wenn die Lenkwinkelgeschwindigkeit größer als der eingestellte untere Grenzwert der links drehenden Richtung bei der Lenkposition des nach rechts drehenden Fahrzeugs oder die Lenkwinkelgeschwindigkeit größer als der eingestellte untere Grenzwert der rechts drehenden Richtung bei der Lenkposition des nach links drehenden Fahrzeugs ist, als Ergebnis der Ermittlung in dem dritten Schritt; und
Durchführen einer Rückstellungssteuerungsfunktion durch Steuern des Betriebs des Motors gemäß dem erhaltenen Motorantriebsstrom.

## Revendications

1. Procédé de commande de rappel dans un système de direction à assistance électrique, comprenant :
- une première étape de définition d'un gain de rappel pour une vitesse de véhicule (S11) dans une ECU du système EPS et de définition d'un modèle de rappel pour un angle de braquage (S12) ;
- une deuxième étape d'obtention d'un courant (13) de rappel en multipliant le gain de rappel défini à la première étape et le modèle de rappel défini à la première étape ;
- une troisième étape de détermination si l'angle de braquage est une position de braquage à laquelle un véhicule tourne à droite et si la vitesse angulaire de braquage est supérieure à une valeur définie de limite inférieure de sens antihoraire (S14) ou si l'angle de braquage est une position de braquage à laquelle un véhicule tourne à gauche et si la vitesse angulaire de braquage est supérieure à une valeur définie de limite inférieure de sens horaire (S15) après exécution de la deuxième étape ; et
- une quatrième étape d'obtention d'un courant d'entraînement de moteur en additionnant un courant d'assistance et le courant de rappel obtenu à la deuxième étape si la vitesse angulaire de braquage est supérieure à la valeur définie de limite inférieure de sens antihoraire à la position de braquage du véhicule tournant à droite ou si la vitesse angulaire de braquage est supérieure à la valeur définie de limite inférieure de sens horaire à la position de braquage du véhicule tournant à gauche comme le résultat de la détermination à la troisième étape ; et
- l'exécution d'une fonction de commande de rappel en commandant le fonctionnement du moteur en fonction du courant d'entraînement de moteur obtenu.
